(19) **Europäisches Patentamt / European Patent Office / Office européen des brevets**

(11) **EP 3 382 978 A1**

(12) # EUROPEAN PATENT APPLICATION

(43) Date of publication:
03.10.2018 Bulletin 2018/40

(51) Int Cl.:
*H04L 29/06* (2006.01)    *H04L 12/26* (2006.01)

(21) Application number: 17164240.8

(22) Date of filing: 31.03.2017

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(71) Applicant: **Nagravision SA**
**1033 Cheseaux-sur-Lausanne (CH)**

(72) Inventors:
• **Giner, Adrien**
**1033 Cheseaux-sur-Lausanne (CH)**
• **Junod, Antoine**
**1033 Cheseaux-sur-Lausanne (CH)**

(74) Representative: **Korenberg, Alexander Tal et al**
**Kilburn & Strode LLP**
**Lacon London**
**84 Theobalds Road**
**London WC1X 8NL (GB)**

(54) **DISTRIBUTED DENIAL OF SERVICE ANALYSIS**

(57)    There is provided a system and method for assessing activity within a network. The method comprises requesting a first set of data logs from a plurality servers in the network, the data logs comprising entries indicating details of network entities that have received one or more communications from the servers. The method further comprises requesting a second set of data logs from the plurality of servers in the network and comparing the first and second set of data logs to calculate a volume of data communication to one or more network entities from the servers. Also provided are computer executable instructions for carrying out this method for assessing activity within a network.

Fig. 2

**Description**

FIELD

The present disclosure relates to the assessment of network traffic. In particular, but not exclusively, the disclosure relates to the detection of Distributed Denial of Service (DDoS) attacks.

BACKGROUND

A Distributed Denial of Service (DDoS) attack is designed to make a network resource unavailable for its intended purposes by overloading it with unnecessary or illegitimate requests. Such an attack is referred to as "distributed" because these requests are provided from multiple sources, making them harder to isolate and prevent.
One type of DDoS attack is a "reflected" DDoS attack. In this approach, a malicious entity will send forged requests to independent parties which will then respond. The forged requests will include false or spoofed address information associated with the victim, meaning that the responses of the independent parties will be directed to that victim. One example is an NTP Monlist attack, in which NTP servers are sent Monlist queries with a spoof address associated with an intended victim, causing the NTP servers to return results to that spoof address. Monlist is a remote command in NTP that sends the requester a history of previous queries to that server. In practice, the history provided is significantly larger than the request itself, meaning that this is a way in which an attacker can magnify the size of their attack as well as distributing between different NTP servers.

BRIEF DESCRIPTION OF THE DRAWINGS

FIG. 1 is a schematic illustration of a network and entities associated with it;
FIG. 2 is a flow diagram showing the process of a preferred embodiment; and
FIG. 3 shows a hardware infrastructure for implementing a preferred embodiment.

DETAILED DESCRIPTION OF THE DRAWINGS

In overview, a method in accordance with the disclosure comprises steps of obtaining sequential sets of data logs, such as Monlists, and inferring from a comparison of these a volume of data communication from a group of servers associated with one or more network entities. In this way, information can be derived to identify unusual or unwanted network behaviour such as DDoS attacks. The disclosure further provides a computer readable medium and a system configured to carry out this method.
In some aspects of the disclosure a method for assessing activity within a network comprises requesting a first set of data logs from a plurality of servers in the network and requesting a second set of data logs from the plurality of servers. The data logs comprise entries indicating details of network entities that have received one or more communications from the servers. The method further comprises comparing the first and second set of data logs to calculate a volume of data communication to one or more network entities from the servers.
The details indicated by entries in the data logs may comprise addresses of the network entities. These details may alternatively or additionally comprise information relating to the number of occasions on which the servers have communicated with each network entity, optionally together with the size of these communications. Furthermore, the details may comprise a time since the last communication and/or information relating to the frequency of communication with each entity.
Optionally, the step of comparing the first and second set of data logs comprises comparing data logs from a first server amongst the plurality of servers. Volume of data communication from the first server to one or more of the network entities may be calculated. Moreover, an aggregated volume of data communication from the plurality of servers to a given entity is calculated if the bandwidth to the given entity from the first server exceeds a threshold. In this way, a comparison carried out on data logs from a first server, and optionally, one or more other servers, may be used to identify entities for which an aggregated volume of communication across the servers as a whole should be calculated. This can efficiently lead to identification of entities and communications of interest, without requiring analysis of all entries in the sets of data logs.
The method may further comprise, prior to the step of comparing, filtering the first and second data logs to remove entries relating to one or more network entities. This reduces the volume of data which undergoes the comparison step, increasing the efficiency of the process.
Optionally, the step of filtering comprises removing entries relating to network entities if a number of communications received from a server is less than a predetermined threshold. Alternatively or additionally, the step of filtering comprises removing entries relating to network entities if a time since a last communication to that entity exceeds a threshold. These processes can ensure the data logs which are unlikely to be of interest are not processed. The step of filtering may also comprise removing data logs that do not comply with format expectations.

The method may comprise identifying the plurality of servers prior to requesting the first set of data logs. This may involve analysis of network address details and querying multiple network entities to identify their response. For example, where the servers are NTP servers, the step of identifying may comprise initiating a Monlist request to a number of network entities and identifying entities as relevant NTP servers if they return a Monlist.

The step of requesting the second data logs may occur a predetermined time after the step of requesting the first set of data logs. The predetermined time may be 15 minutes, for example. There may also be additional occasions on which data logs are retrieved after a set interval. By obtaining sets of data logs at set time periods, analysis of the significance of the results they contain may be simplified.

In preferred embodiments, the servers are NTP servers. Alternatively or additionally, the data logs are Monlists. The network may be the internet. As such, some preferred embodiments may be utilised to identify DDoS attacks using the NTP Monlist command.

In some aspects of the disclosure, there is provided a computer readable medium comprising computer executable instructions for carrying out the method of the aspects described above. Moreover, further aspects of the disclosure provide a system configured to carry out these methods.

In some aspects of the disclosure there is provided a system for assessing activity within a network. The system is configured to request a first and second sets of data logs from a plurality servers in the network, the data logs comprising entries indicating details of network entities that have received one or more communications from the servers. The system is further configured to compare the first and second set of data logs to calculate volume of data communication to one or more network entities from the servers.

Some specific embodiments are now described by way of illustration with reference to the accompanying drawings in which like reference numerals refer to like features.

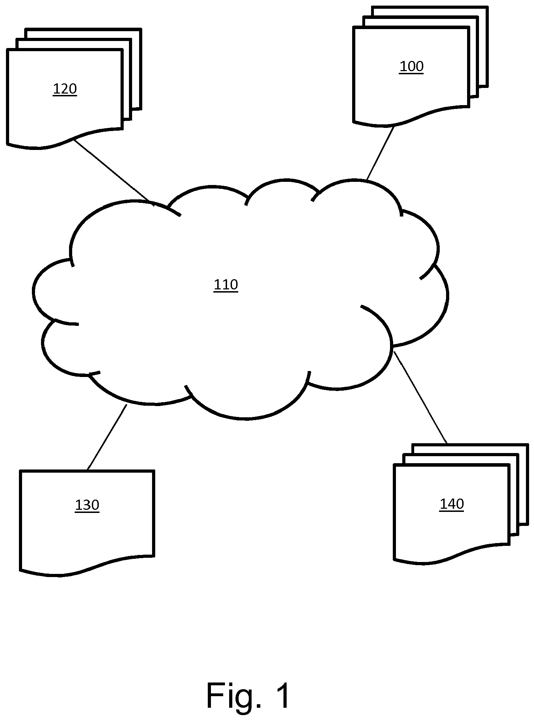

With reference to Figure 1, a system is illustrated which comprises a plurality of Network Time Protocol (NTP) servers 100 coupled to network 110. The network 110 in the preferred embodiment is the internet.

The system also comprises one or more malicious entities 120, an investigative server 130 and one or more users 140. The malicious entities and the investigative server are also coupled to the network 110.

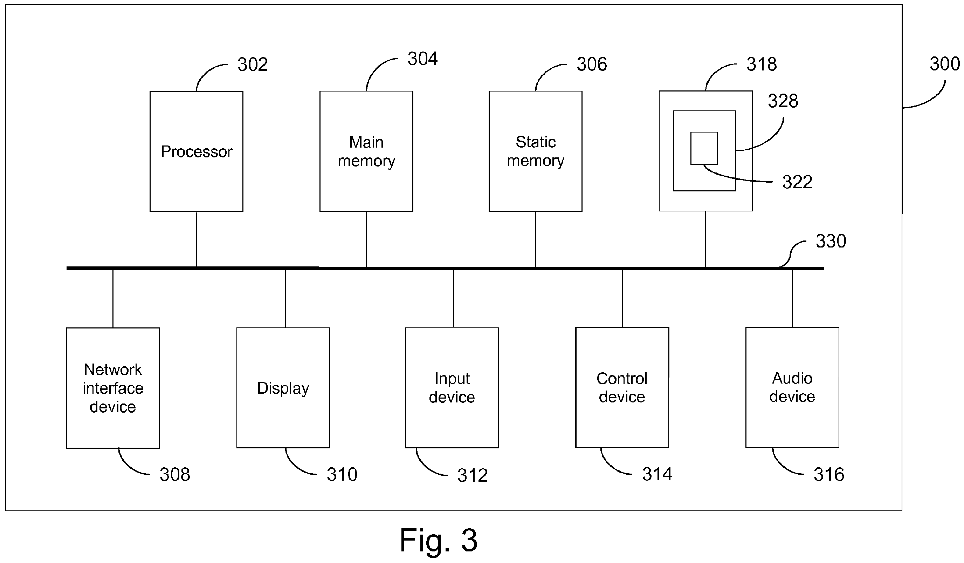

Each of the NTP servers 100, malicious entities 120, the investigative server 130 and the users 140 can be implemented as an appropriate hardware configuration running suitable software. Further details of potential implementations are described below with reference to Figure 3.

Network 110 facilitates communication between NTP servers 100, malicious entities 120, the investigative server 130 and the users 140. In particular, requests and data or packet transfers may be made between NTP servers 100, malicious entities 120, the investigative server 130 and the users 140 using any appropriate protocol such as any internet protocol including, for example, TCP and UDP.

NTP servers 100 retain details of entities from which they have received requests in a data log called a "Monlist". When any entity queries an NTP server 100, that NTP server's Monlist is updated to reflect this query. The Monlist can be used to analyse a given NTP server's 100 activity (for example, for debugging purposes) but can also be accessed externally by other entities connected to the network 110. In general, two queries from the same entity will be aggregated in the Monlist in a single entry.

In the illustrated embodiment, the Monlist comprising the following information:

- Avg_int: The average duration in seconds between each query from a given entity
- Last_int: The number of seconds since the last query from a given entity
- Count: The number of packets received by a given entity from the NTP server
- Mode: The NTP mode of the last packet received by a given entity from the NTP server (the NTP specifies certain packet types as "modes", of which the Monlist query typically uses "mode 7")
- Source: The address of the given entity querying the NTP Server
- Time: a timestamp showing the time at which the Monlist is issued
- Additional fields: There may be one or more additional fields related to the port, source or other properties at the NTP server.

In a DDoS attack using NTP servers 100, one or more malicious entities will send Monlist queries to the NTP server 100. Each NTP server 100 will respond to each query it receives with its Monlist. This response will be directed towards the apparent source of the query, which in an attack will be disguised such that the NTP servers 100 believe the queries to have originated with a victim amongst the users 140. The victim thus receives traffic as a result of the actions of the malicious entities 120. Since the Monlist response is many times larger than the query required to obtain it, this acts to multiply the ability of the malicious entities 120 to launch an effective DDoS attack. As such, a few malicious entities 120 can launch a very large attack upon a victim amongst the users 140.

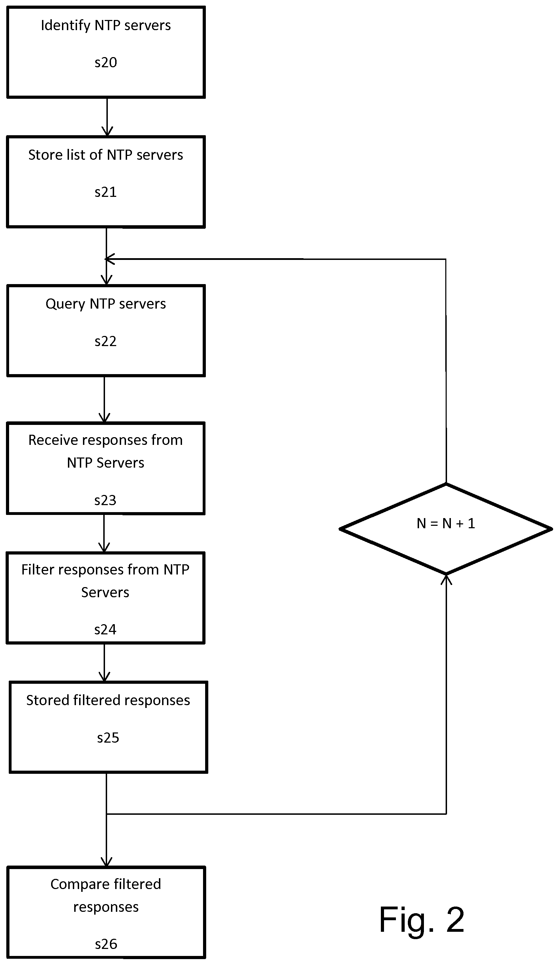

It is desirable to identify DDoS attacks that are carried out this way and their victims. One method for analysing this can be understood with reference to Figure 2, which is a flow diagram showing a process for identifying such attacks. The steps of Figure 2 are carried out by the investigative server 130.

In the process shown in Figure 2, the first step is to identify NTP servers 120 at step s20. This can be carried out by a portscanning process. For example, step s20 may comprise scanning IPv4 space on UDP port 123, initiating a valid Monlist query to all hosts, and identifying those which respond with a valid Monlist Response as NTP servers 120. At step s21, a list of NTP servers 120 is stored. In alternative embodiments, the list of NTP servers 120 may be obtained in another way, for example it may be received from a third party or be inferred from other network information.

The process then continues to step s22, at which all NTP servers 120 identified at step s20 are sent a Monlist query. The Monlist responses from the NTP servers are then received at step s23. As such, the investigative entity receives a set of data logs (Monlists in this case) from the servers. This set of data logs is then filtered at step s24, before the filtered results are stored at step s25.

Filters may include removing entries relating to particular users 140 if the count is less than a predetermined value (for example, if the count of queries from that user 140 is less than 50). Moreover, entries for a particular user 140 may be removed if the time since the last query (last_int) exceeds a predetermined value. In this manner, entries which are unlikely to relate to large volumes of traffic can be excised. Entries may also be removed if they are associated with a specific users 140 (or network addresses) that are not subject of analysis or if they do not meet set criteria. Entire Monlists may be filtered if, for example, thy do not meet an expected specification.

The filtering at step s24 reduces the volume of information to a manageable level for later analysis, and can act to remove a significant proportion of entries from that analysis. In this way, an analysis of results from all NTP servers 120 can be carried out without a prohibitive resource requirement.

Steps s22 to s25 are repeated at a predefined interval. In the embodiment illustrated, this interval is 15 minutes. Each iteration of steps s22 to s25 is associated with an integer N which is increased by one on each repetition. Thus at step s23, an Nth set of data logs (in this case, Monlists) are received from the NTP servers.

A processing step at step s26 compares latest filtered results N with a previous result N-1. For example, a second set of Monlists may be compared with a first set of Monlists previously received by the investigative server. This comparison allows information to be inferred about the bandwidth of communications received by users 140 from the NTP servers 120. This can help to identify potential DDoS attacks.

Additional filtering may be carried out during the processing step s26. For example, all entries from a given server may be removed if amplification exceeds a certain value, such as for example over 1000. All entries from a server may also be removed if a given user 140/address appears more than once. Such results may indicate an unorthodox/unexpected format of the Monlist, potentially due to corruption or other unwanted manipulation of the data, suggesting that further calculations based on that Monlist may yield unreliable results. For example, a given address will typically appear only once in a Monlist of the expected format, meaning that if it appears more than once, the Monlist does not comply with expectations.

Two successive Monlists from the same NTP server 120 can be compared to assess, for each entry associated with a given user 140, a number of factors. For example, the count of packets apparently received from that user 140 by that NTP server 120 can be identified in each Monlist, and the difference will show the count in the period between the two successive results. The time difference between those results can be assessed from the associated times given for each Monlist. An amplification factor showing the difference between the size of the queries received by the NTP server 140 and the size of the provided responses can also be calculated. The size of the queries themselves may also be identified from the Monlist data or otherwise known. For example, such queries may have a size of 114 bytes.

The bandwidth of data, i.e. volume of data communication sent to a given user 140 from a given NTP server 120 can thus be calculated as follows:

$$\text{Bandwidth in bits per second (bps)} = (Cd * Qs * Af * 8)/Td$$

where Cd is the Count Difference between successive Monlists, Td is the time difference between successive Monlists, Qs is the query size in bytes and Af is the amplification factor.

If the bandwidth for a given user 140 calculated from successive Monlists from a given NTP server 120 does not meet a threshold value then no further actions are taken for that user. An example of threshold may be 10,000,000bps/10Mbps. On the other hand, if the bandwidth for that user exceeds the threshold value, the process aggregates bandwidths calculated for that user across the filtered results for all NTP servers 120 to give a total bandwidth. The use of the threshold at this point can ensure that aggregation will only occur for those entries in a given Monlist which appear of interest. The total bandwidth will show the rate of data received by a given user 140 from the NTP servers 120 as a whole. Moreover, associated with the total bandwidth can be a timestamp of the calculation, details - such as address- of the particular user 140 and the number of NTP servers 120 contributing to this bandwidth, for example. This data is then stored.

This process can give a global overview of potential ongoing attacks. A list of potential victims amongst the users can be generated, together with the bandwidth of traffic being directed towards them. Furthermore, information regarding the number of NTP servers involved in the attack on any particular victim can be identified, together with the identity of those servers. From this process, patterns of behaviour may be identifiable in order to mitigate current and future risks.

Figure 3 illustrates a block diagram of one implementation of a computing device 300 within which a set of instructions, for causing the computing device to perform any one or more of the methodologies discussed herein, may be executed. The computing device 300 may be used for NTP servers 100, malicious entities 120, the investigative server 130 and the users 140. In alternative implementations, the computing device may be connected (e.g., networked) to other machines in a Local Area Network (LAN), an intranet, an extranet, or the Internet. The computing device may operate in the capacity of a server or a client machine in a client-server network environment, or as a peer machine in a peer-to-peer (or distributed) network environment. The computing device may be a personal computer (PC), a tablet computer, a set-top box (STB), a Personal Digital Assistant (PDA), a cellular telephone, a web appliance, a server, a network router, switch or bridge, or any machine capable of executing a set of instructions (sequential or otherwise) that specify actions to be taken by that machine. Further, while only a single computing device is illustrated, the term "computing device" shall also be taken to include any collection of machines (e.g., computers) that individually or jointly execute a set (or multiple sets) of instructions to perform any one or more of the methodologies discussed herein.

The example computing device 300 includes a processing device 302, a main memory 304 (e.g., read-only memory (ROM), flash memory, dynamic random access memory (DRAM) such as synchronous DRAM (SDRAM) or Rambus DRAM (RDRAM), etc.), a static memory 306 (e.g., flash memory, static random access memory (SRAM), etc.), and a secondary memory (e.g., a data storage device 318), which communicate with each other via a bus 330.

Processing device 302 represents one or more general-purpose processors such as a microprocessor, central processing unit, or the like. More particularly, the processing device 302 may be a complex instruction set computing (CISC) microprocessor, reduced instruction set computing (RISC) microprocessor, very long instruction word (VLIW) microprocessor, processor implementing other instruction sets, or processors implementing a combination of instruction sets. Processing device 302 may also be one or more special-purpose processing devices such as an application specific integrated circuit (ASIC), a field programmable gate array (FPGA), a digital signal processor (DSP), network processor, or the like. Processing device 302 is configured to execute the processing logic (instructions 322) for performing the operations and steps discussed herein.

The computing device 300 may further include a network interface device 308. The computing device 300 also may include a video display unit 310 (e.g., a liquid crystal display (LCD) or a cathode ray tube (CRT)), an alphanumeric input device 312 (e.g., a keyboard or touchscreen), a cursor control device 314 (e.g., a mouse or touchscreen), and an audio device 316 (e.g., a speaker).

The data storage device 318 may include one or more machine-readable storage media (or more specifically one or more non-transitory computer-readable storage media) 328 on which is stored one or more sets of instructions 322 embodying any one or more of the methodologies or functions described herein. The instructions 322 may also reside, completely or at least partially, within the main memory 304 and/or within the processing device 302 during execution thereof by the computer system 300, the main memory 304 and the processing device 302 also constituting computer-readable storage media.

The various methods described above may be implemented by a computer program. The computer program may include computer code arranged to instruct a computer to perform the functions of one or more of the various methods described above. The computer program and/or the code for performing such methods may be provided to an apparatus, such as a computer, on one or more computer readable media or, more generally, a computer program product. The computer readable media may be transitory or non-transitory. The one or more computer readable media could be, for example, an electronic, magnetic, optical, electromagnetic, infrared, or semiconductor system, or a propagation medium for data transmission, for example for downloading the code over the Internet. Alternatively, the one or more computer readable media could take the form of one or more physical computer readable media such as semiconductor or solid state memory, magnetic tape, a removable computer diskette, a random access memory (RAM), a read-only memory (ROM), a rigid magnetic disc, and an optical disk, such as a CD-ROM, CD-R/W or DVD.

In an implementation, the modules, components and other features described herein (for example control unit 310 in relation to Figure 3) can be implemented as discrete components or integrated in the functionality of hardware components such as ASICS, FPGAs, DSPs or similar devices as part of an individualization server.

A "hardware component" is a tangible (e.g., non-transitory) physical component (e.g., a set of one or more processors) capable of performing certain operations and may be configured or arranged in a certain physical manner.

A hardware component may include dedicated circuitry or logic that is permanently configured to perform certain operations. A hardware component may be or include a special-purpose processor, such as a field programmable gate array (FPGA) or an ASIC. A hardware component may also include programmable logic or circuitry that is temporarily configured by software to perform certain operations.

Accordingly, the phrase "hardware component" should be understood to encompass a tangible entity that may be physically constructed, permanently configured (e.g., hardwired), or temporarily configured (e.g., programmed) to operate in a certain manner or to perform certain operations described herein.

In addition, the modules and components can be implemented as firmware or functional circuitry within hardware devices. Further, the modules and components can be implemented in any combination of hardware devices and software components, or only in software (e.g., code stored or otherwise embodied in a machine-readable medium or in a transmission medium).

Unless specifically stated otherwise, as apparent from the following discussion, it is appreciated that throughout the description, discussions utilizing terms such as " receiving", "determining", "comparing ", "enabling", "maintaining," "identifying," "replacing," or the like, refer to the actions and processes of a computer system, or similar electronic computing device, that manipulates and transforms data represented as physical (electronic) quantities within the computer system's registers and memories into other data similarly represented as physical quantities within the computer system memories or registers or other such information storage, transmission or display devices.

It is to be understood that the above description is intended to be illustrative, and not restrictive. Many other implementations will be apparent to those of skill in the art upon reading and understanding the above description. Although the present disclosure has been described with reference to specific example implementations, it will be recognized that the disclosure is not limited to the implementations described, but can be practiced with modification and alteration within the spirit and scope of the appended claims. Accordingly, the specification and drawings are to be regarded in an illustrative sense rather than a restrictive sense. The scope of the disclosure should, therefore, be determined with reference to the appended claims, along with the full scope of equivalents to which such claims are entitled.

**Claims**

1. A method for assessing activity within a network comprising:

    requesting a first set of data logs from a plurality servers in the network, the data logs comprising entries indicating details of network entities that have received one or more communications from the servers;
    requesting a second set of data logs from the plurality of servers in the network;
    comparing the first and second set of data logs to calculate a volume of data communication to one or more network entities from the servers.

2. A method according to claim 1, wherein the step of comparing the first and second set of data logs comprises comparing data logs from a first server amongst the plurality of servers.

3. A method according to claim 2, wherein volume of data communication from the first server to one or more of the network entities is calculated.

4. A method according to claim 3, wherein aggregated volume of data communication from the plurality of servers to a given entity is calculated if the bandwidth to the given entity from the first server exceeds a threshold.

5. A method according to any one of the preceding claims, further comprising, prior to the step of comparing, filtering the first and second data logs to remove entries relating to one or more network entities.

6. A method according to claim 5, wherein the step of filtering comprises removing entries relating to network entities if a number of communications received from a server is less than a predetermined threshold.

7. A method according to claim 5 or claim 6, wherein the step of filtering comprises removing entries relating to network entities if a time since a last communication to that entity exceeds a threshold.

8. A method according to any one of claims 5 to 7, wherein the step of filtering comprises removing data logs that do not comply with format expectations.

9. A method according to any one of the preceding claims, further comprising identifying the plurality of servers prior to requesting the first set of data logs.

10. A method according to any one of the preceding claims, wherein the step of requesting the second data logs occurs a predetermined time after the step of requesting the first set of data logs.

11. A method according to any one of the preceding claims, wherein the servers are NTP servers.

12. A method according to any one of the preceding claims, wherein the data logs are Monlists.

13. A method according to any one of the preceding claims, wherein the network is the internet.

14. A computer readable medium comprising computer executable instructions for carrying out the method of any one of the preceding claims.

15. A system for assessing activity within a network, the system being configured to:

   request a first set of data logs from a plurality servers in the network, the data logs comprising entries indicating details of network entities that have received one or more communications from the servers;
   request a second set of data logs from the plurality of servers in the network;
   compare the first and second set of data logs to calculate a volume of data communication to one or more network entities from the servers.

120

100

110

130

140

Fig. 1

```
┌─────────────────────┐
│  Identify NTP servers │
│                     │
│        s20          │
└─────────────────────┘
          │
          ▼
┌─────────────────────┐
│ Store list of NTP servers │
│                     │
│        s21          │
└─────────────────────┘
          │
          ▼
┌─────────────────────┐
│   Query NTP servers  │
│                     │
│        s22          │
└─────────────────────┘
          │
          ▼
┌─────────────────────┐
│  Receive responses from │
│      NTP Servers     │
│                     │
│        s23          │
└─────────────────────┘
          │
          ▼
┌─────────────────────┐        ◇
│ Filter responses from NTP │      N = N + 1
│      Servers         │        ◇
│                     │
│        s24          │
└─────────────────────┘
          │
          ▼
┌─────────────────────┐
│ Stored filtered responses │
│                     │
│        s25          │
└─────────────────────┘
          │
          ▼
┌─────────────────────┐
│  Compare filtered    │
│    responses         │
│                     │
│        s26          │
└─────────────────────┘
```

Fig. 2

EP 3 382 978 A1

Fig. 3

Europäisches
Patentamt

European
Patent Office

Office européen
des brevets

# EUROPEAN SEARCH REPORT

Application Number

EP 17 16 4240

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 8 625 757 B1 (KARPOV ALEXANDRE [US] ET AL) 7 January 2014 (2014-01-07) * column 2, line 10 - column 3, line 2 * * column 5, line 23 - line 49 * * column 6, line 51 - column 7, line 34 * * column 14, line 64 - column 15, line 8 * * claims 1-5,8 * | 1-15 | INV. H04L29/06 H04L12/26 |
| A | US 9 516 039 B1 (YEN TING-FANG [US] ET AL) 6 December 2016 (2016-12-06) * column 1, line 54 - column 2, line 9 * * column 3, line 64 - column 4, line 9 * * column 7, line 23 - line 35 * * column 9, line 17 - line 25 * | 1-15 | |

TECHNICAL FIELDS
SEARCHED     (IPC)

H04L

The present search report has been drawn up for all claims

| Place of search | Date of completion of the search | Examiner |
|---|---|---|
| Munich | 24 May 2017 | Pohl, Daniel |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

.....................................................................................................

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 17 16 4240

This annex lists the patent family members relating to the patent documents cited in the above-mentioned European search report.
The members are as contained in the European Patent Office EDP file on
The European Patent Office is in no way liable for these particulars which are merely given for the purpose of information.

24-05-2017

| Patent document cited in search report | Publication date | Patent family member(s) | Publication date |
|---|---|---|---|
| US 8625757 B1 | 07-01-2014 | NONE | |
| US 9516039 B1 | 06-12-2016 | NONE | |

EPO FORM P0459

For more details about this annex : see Official Journal of the European Patent Office, No. 12/82